# EUROPEAN PATENT APPLICATION

(11) **EP 3 396 462 A1**
(43) Date of publication of application: **31.10.2018**
(21) Application number: 18160696.3
(22) Date of filing: 08.03.2018
(51) Int. Cl.: G03G 15/00, H04N 1/44

(54) **IMAGE FORMING APPARATUS**

(30) Priority: 24.04.2017 JP 2017085558
(71) Applicant: Toshiba TEC Kabushiki Kaisha, Tokyo 141-8562 (JP); KABUSHIKI KAISHA TOSHIBA, Minato-ku Tokyo 105-8001 (JP)
(72) Inventor: Katsumata, Satoshi, Tokyo, 141-8562 (JP)
(74) Representative: Hoffmann Eitle

(57) **Abstract**

An image forming apparatus includes an image forming unit configured to form an image on a sheet, a sheet discharge tray, a sheet discharge unit positioned between the image forming unit and the sheet discharge tray to discharge a first sheet after an image has been formed on the first sheet by the image forming unit, onto the sheet discharge tray, and a control unit. The control unit is configured to cause a second sheet, which is a light blocking sheet, to be discharged onto the first sheet after the first sheet has been discharged onto the sheet discharge tray.

## Description

### CROSS-REFERENCE TO RELATED APPLICATION

This application is based upon and claims the benefit of priority from Japanese Patent Application No. 2017-085558, filed April 24, 2017, the entire contents of which are incorporated herein by reference.

### FIELD

Embodiments described herein relate generally to an image forming apparatus that prevents information from leaking out from a sheet on which an image is formed and which is discharged.

### BACKGROUND

In the related art, an image forming apparatus that, after executing a printing job, discharges a first sheet that has a predetermined visible pattern thereon, onto a second sheet on which an image is formed according to the printing job, for coverage, is known. However, there is a concern that the image formed on the second sheet will be seen through the first sheet which has the predetermined visible pattern thereon because of the transparency of the first sheet and, as a result, information formed on the second sheet, will leak out.

### SUMMARY OF THE INVENTION

It is an object of the present invention to overcome prior art problems.

According to a first aspect, it is provided an image forming apparatus comprising: an image forming unit configured to form an image on a sheet; a sheet discharge tray; a sheet discharge unit positioned between the image forming unit and the sheet discharge tray to discharge a first sheet after an image has been formed on the first sheet by the image forming unit, onto the sheet discharge tray; and a control unit configured to cause a second sheet, which is a light blocking sheet, to be discharged onto the first sheet after the first sheet has been discharged onto the sheet discharge tray.

Optionally, in the apparatus of the first aspect, the light blocking sheet is a sheet on which a light blocking image is formed by the image forming unit.

Optionally, in the apparatus of the first aspect, the light blocking sheet is a sheet made of light blocking material.

Optionally, in the apparatus of the first aspect, the light blocking sheet has a larger size than the first sheet.

Optionally, the apparatus of the first aspect further comprises: a sheet sensor installed on the sheet discharge tray to detect whether or not a sheet is loaded on the sheet discharge tray; and a timer configured to measure a time period the sheet remains detected by the sensor, wherein, if the measured time period exceeds a predetermined time period, the control unit causes the light blocking sheet to be discharged onto the detected sheet.

Optionally, the apparatus of the first aspect further comprises: a sheet sensor installed on the sheet discharge tray to detect whether or not a sheet is loaded on the sheet discharge tray, wherein, if the sensor detects the sheet on the sheet discharge tray upon execution of a new printing job, the control unit causes the light blocking sheet to be discharged onto the detected sheet.

Optionally, the apparatus of the first aspect, further comprises: a sheet sensor installed on the sheet discharge tray to detect whether or not a sheet is loaded on the sheet discharge tray, wherein, if the sensor detects the sheet on the sheet discharge tray upon execution of a new printing job, the control unit (i) causes the light blocking sheet to be discharged onto the detected sheet in response to determining that an executor of the new printing job is different from an executor of a printing job that produced the detected sheet, and (ii) cause a sheet from the new printing job to be discharged on top of the detected sheet without discharging the light blocking sheet.

Optionally, in the apparatus of the first aspect, the control unit causes sheets from different jobs to be discharged alternately to be in a vertical orientation and a horizontal orientation.

According to a second aspect, it is provided an image forming method comprising: forming an image on a first sheet; discharging the first sheet after the image has been formed on the first sheet onto a sheet discharge tray; and discharging a second sheet, which is a light blocking sheet, onto the first sheet after the first sheet has been discharged onto the sheet discharge tray.

Optionally, in the method according to the second aspect, the light blocking sheet is a sheet on which a light blocking image is formed by the image forming unit.

Optionally, in the method according to the second aspect, the light blocking sheet is a sheet made of light blocking material.

Optionally, in the method according to the second aspect, the light blocking sheet has a larger size than the first sheet.

Optionally, the method according to the second aspect further comprises: detecting whether or not a sheet is loaded on the sheet discharge tray; measuring a time period the sheet remains detected by the sensor; and upon detecting that the measured time period exceeds a predetermined time period, discharging the light blocking sheet onto the detected sheet.

Optionally, the method according to the second aspect further comprises: detecting whether or not a sheet is loaded on the sheet discharge tray; and if the sheet is detected to be on the sheet discharge tray upon execution of a new printing job, discharging the light blocking sheet onto the detected sheet.

Optionally, the method according to the second aspect further comprises: detecting whether or not a sheet is loaded on the sheet discharge tray; and if the sheet is detected to be on the sheet discharge tray upon execution of a new printing job, (i) discharging the light blocking sheet onto the detected sheet in response to determining that an executor of the new printing job is different from an executor of a printing job that produced the detected sheet, and (ii) discharging a sheet from the new printing job on top of the detected sheet without discharging the light blocking sheet.

Optionally, in the method according to the second aspect, sheets from different jobs are discharged alternately to be in a vertical orientation and a horizontal orientation.

### DESCRIPTION OF THE DRAWINGS

FIG. 1 is a control block diagram of a hardware configuration of an image forming apparatus according to a first embodiment.
FIG. 2 is a cross-sectional diagram of the image forming apparatus according to the first embodiment.
FIG. 3 is a plan view illustrating a position of a sensor of a sheet discharge tray according to the first embodiment.
FIGs. 4A to 4C are plan views, each illustrating an example of a pattern as a light blocking sheet according to the first embodiment.
FIG. 5 is a flowchart depicting control process to discharge the light blocking sheet after a predetermined time elapses, according to the first embodiment.
FIG. 6 is a flowchart depicting control process to discharge the light blocking sheet after a job is executed, according to the first embodiment.
FIG. 7 is a flowchart depicting control process to discharge a light blocking sheet according to a second embodiment.
FIG. 8 is a plan view illustrating discharge of a sheet that is to be performed if job executors are the same, according to the second embodiment.
FIG. 9 is a plan view illustrating discharge of a sheet that is to be performed if the job executors are different from each other, according to the second embodiment.
FIG. 10 is a plan view illustrating discharge of a job C according to the second embodiment.
FIG. 11 is a plan view illustrating a modification example of the light blocking sheet according to the second embodiment.
FIG. 12 is a plan view illustrating a combination of patterns as the light blocking sheet according to the second embodiment.

### DETAILED DESCRIPTION

In general, according to one embodiment, there is provided an image forming apparatus that prevents information from leaking out from a sheet on which an image is formed.

In order to solve the problems described above, an image forming apparatus according to the embodiment includes an image forming unit configured to form an image on a sheet, a sheet discharge tray, a sheet discharge unit positioned between the image forming unit and the sheet discharge tray to discharge a first sheet after an image has been formed on the first sheet by the image forming unit, onto the sheet discharge tray, and a control unit. The control unit performs control that causes a light blocking sheet to be discharged after the sheet is discharged to the sheet discharge tray.

Embodiments will be described below with reference to the drawings.

### First Embodiment

According to the embodiment, an image forming apparatus 1 is taken as an example for description.

The image forming apparatus 1, for example, is a multi-function peripheral that is capable of forming an image on a sheet using a toner.

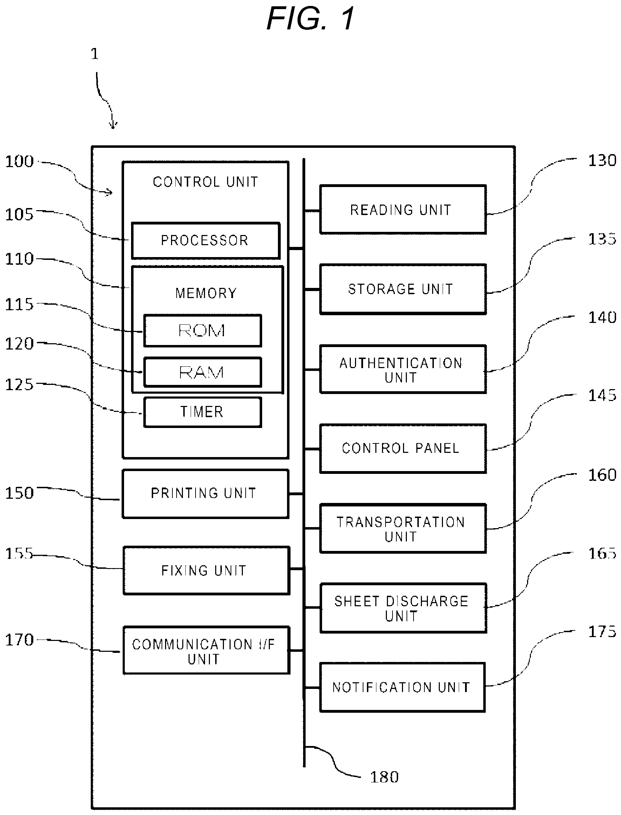

FIG. 1 is a control block diagram of a hardware configuration of the image forming apparatus 1. The image forming apparatus 1 has the following hardware elements: a control unit 100, a timer 125, a reading unit 130, a storage unit 135, an authentication unit 140, a control panel 145, a printing unit 150, a fixing unit 155, a transportation unit 160, a sheet discharge unit 165, and a communication interface (hereinafter, referred to as "I/F") unit 170, and a notification unit 175. Units of the image forming apparatus 1 are connected to each other through a bus line 180.

The control unit 100 has a processor 105 that is configured as a central processing unit (CPU) or a micro-processing unit (MPU), and a memory 110. The memory 110, for example, is a semiconductor memory, and has a read only memory (hereinafter, referred to as "ROM") 115 in which various control programs are stored, and a random access memory (hereinafter, referred to as "RAM") 120 that provides a temporary working area to the processor 105. The RAM 120 may temporarily retain an image that is read by the reading unit 130 that will be described below. Based on various control programs that are stored in the ROM 115, the control unit 100 controls each unit of the image forming apparatus 1. Each of the functions of the control unit 100 can also be realized by control circuit, ASIC, or a combination thereof.

Additionally, the control unit 100 includes the timer 125. The timer 125 starts to count the time, when a sensor 168 that will be described below detects a sheet. The count is reset, for example, in at least one of a case where the control unit 100 performs control in such a manner that an image forming unit forms an image on a sheet and a case where the sensor 168 no longer detects a sheet.

The reading unit 130, for example, is a scanner that reads an image of a sheet that is a target of a scanning operation. The reading unit 130 retains image information that is read from the sheet, as image data, in the storage unit 135 that will be described below. The image data that is retained in the storage unit 135 may be transmitted to other information processing apparatuses through a network. Furthermore, the image data that is retained in the storage unit 135 may be formed on another sheet by the image forming unit that will be described below.

The image data that is read by the reading unit 130 is retained in the storage unit 135. The storage unit 135, for example, may be a hard disk drive, a magnetic storage device, an optical storage device, a semiconductor storage device such as a flash memory, or an arbitrary combination thereof.

The authentication unit 140 acquires authentication data of a user. The authentication unit 140, in one embodiment, is a card reader. The authentication data is information for identifying a user (hereinafter referred to as a job executor) who instructs to execute a printing job, and is, for example, acquired from a PC that transmits a printing job, or acquired via the card reader from an ID card that is shown when the user operates an operation unit 147 that will be described below. The authentication data may be stored in the storage unit 135.

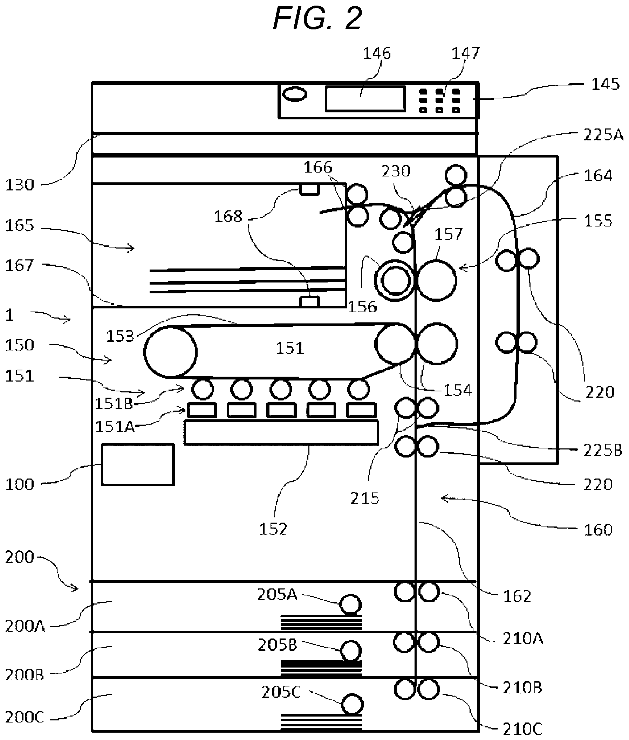

The control panel 145, as illustrated in FIG. 2, includes a display unit 146 and the operation unit 147. The display unit 146 is a display device, such as a liquid crystal display or an organic electroluminescence device. Various elements of information relating to the image forming apparatus 1 are displayed on the display unit 146. The operation unit 147 includes a plurality of buttons and the like. user's operation input is performed on the operation unit 147. The operation unit 147 outputs a signal in accordance with the operation input that is performed by the user, to the control unit 100. Moreover, the display unit 146 and the operation unit 147 may be integrally configured as a touch panel.

The printing unit 150 and the fixing unit 155 function as the image forming unit. The printing unit 150, for example, forms an image on a surface of a sheet using a toner. The toners according to the embodiment include a toner (hereinafter referred to as a normal toner) that is a non-decolorable recoding agent, and a toner (hereinafter referred to as a decolorable toner) that is a decolorable recording agent. The normal toners, for example, include yellow (Y), magenta (M), cyan (C), and black (K) toners, and other toners. The decolorable toner is a colored toner, as is the case with the normal toner, and for example, is blue-colored. For decoloring, the normal toner is heated at predetermined decoloring temperature higher than a fixing temperature at which the normal toner is fixed to a sheet.

The fixing unit 155 includes a heating roller 156 and a pressurizing roller 157. The heating roller 156 applies heat to a sheet, starting from a first surface side of the sheet. The pressurizing roller 157 applies pressure to a sheet, from a second surface side of the sheet. With the applied heat and pressure, the fixing unit 155 causes a toner transferred onto a sheet, to be fixed, when forming an image.

The transportation unit 160 has a plurality of transportation rollers 220, which are arranged along a first transportation path 162 and a second transportation path 164 that are illustrated in FIG. 2, and a plurality of transportation motors that drive these rollers. The first transportation path 162, as illustrated in FIG. 2, is a path for transporting a sheet that is fed from a sheet accommodation unit 200 which will be described below through the printing unit 150 and the fixing unit 155 to the sheet discharge unit 165. The second transportation path 164 is a path for causing a first surface and a second surface of the sheet to be reversed from each other. The reversal of the sheet by the second transportation path 164 will be described in detail below.

The sheet discharge unit 165 includes a sheet discharge roller 166, a sheet discharge opening (not illustrated), and a sheet discharge tray 167. The sheet discharge roller 166 discharges a sheet onto the sheet discharge tray 167. Additionally, the sheet discharge tray 167 includes the sensor 168, as a detection unit for detecting the presence and absence of the loaded sheet. The sensor 168 is configured as a light transmission sensor that uses infrared light, a reflection sensor, an optical sensor that uses a mechanical switch, or the like.

The light transmission sensor includes a light emitting unit and a light receiving unit that is provided to face the light emitting unit. Intensity of light that is emitted by the light emitting unit is detected by the light receiving unit, and thus whether or not a sheet is loaded on the sheet discharge tray 167 is detected. The reflection sensor is configured in such a manner that the light emitting unit and the light receiving unit are arranged side by side on the same surface of the sheet discharge tray 167. In the reflection sensor, a light that is reflected by the sheet after irradiation by the light emitting unit, is received by the light receiving unit, and thus the presence and absence of the sheet are detected. The optical sensor that uses the mechanical switch is configured to include a light emitting unit, a light receiving unit, and a light blocking member that is rotatable between these. If the sheet is not loaded, a light from the light emitting unit is incident on the light receiving unit. If the sheet is loaded, the sheet causes a light blocking member to be rotated and a light blocking member blocks the light. Moreover, according to the embodiment, the light transmission sensor is taken as an example for description.

The communication I/F unit 170 is an interface connect the image forming apparatus 1 to an external apparatus. The communication I/F unit 170, for example, communicates with an external apparatus via a network, in a suitable wireless manner in compliance with IEEE 802.15, IEEE 802.11, IEEE 802.3, IEEE 3304, or the like, such as a standard for Bluetooth®, infrared connection, and optical connection, or in a wired manner. The communication I/F unit 170 may further include a USB connection unit to which a connection terminal in compliance with a USB standard is connected, a parallel interface, and the like. The control unit 100 communicates with an external apparatus through the communication I/F unit 170.

The notification unit 175 notifies a user of various elements of information, such as occurrence of an error. Moreover, the notification unit 175 according to the embodiment notifies the job executor that a sheet is loaded on the sheet discharge tray 167. The notification, for example, may be performed by displaying on the display unit 146 on the control panel 145, transmission of mail to an email address corresponding to the job executor, generation of sound, or emission of light. Examples of the notification unit 175 include an LED, a sound device, a communication interface, and so on.

FIG. 2 is a cross-sectional diagram of the image forming apparatus 1 according to the first embodiment.

The sheet accommodation unit 200 is provided in a lower portion of a casing of the image forming apparatus 1, and includes a plurality of sheet feeding cassettes, sheet feeding cassettes 200A, 200B, and 200c. Various types of sheets and predetermined-sized sheets can be arbitrary stored in the sheet feeding cassettes 200A, 200B, and 200C, respectively. Moreover, a setting of each of the sheet feeding cassettes 200A, 200B, and 200C is able to be suitably changed. The sheet feeding cassettes 200A, 200B, and 200C include pickup rollers 205A, 205B, and 205C, respectively. The pickup rollers 205A, 205B, and 205C pick up one sheet from the sheet feeding cassettes 200A, 200B, and 200C, respectively. The pickup rollers 205A, 205B, and 205C feed the picked up sheet to the first transportation path 162.

The printing unit 150 is positioned on upstream side of the fixing unit 155 in a sheet transporting direction of the first transportation path 162. The printing unit 150 has an image forming unit and a transfer unit for each color. The image forming unit includes a development unit 151 and an exposure unit 152. The development unit 151 has a development part 151A, a photoconductive drum 151B, and an electrification unit that is not illustrated. The electrification unit causes an outer circumferential surface (i.e., a photoconductive layer) of the photoconductive drum 151B to be uniformly electrified. By emitting a laser beam, the exposure unit 152 forms an electrostatic latent image on the outer circumferential surface of the photoconductive drum 151B. The development part 151A performs development by attaching a toner to the electrostatic latent image. The transfer unit includes a transfer belt 153 and a transfer roller 154. A toner image that is developed in the image forming unit is transferred to an outer circumferential surface of the transfer belt 153. The transfer roller 154 transfers an image that is transferred onto the outer circumferential surface of the transfer belt 153, onto a sheet. At this point, as described with reference to FIG. 1, the transferred toner is fixed to the sheet by the fixing unit 155.

The transportation unit 160 has sheet feeding rollers 210A, 210B, and 210C, a registration roller 215, and a plurality of transportation rollers 220. The sheet feeding rollers 210A, 210B, and 210C transport sheets that are fed by the pickup rollers 205A, 205B, and 205C, respectively, to the registration roller 215 through the first transportation path 162. The registration roller 215 transports a sheet to the transfer roller 154, according to a timing at which the printing unit 150 transfers a toner image that is formed with a toner on the transfer belt 153, onto a surface of the sheet. A plurality of transportation rollers 220 are arranged along the first transportation path 162 and the second transportation path 164 that will be described below, and transports the fed sheet, to the sheet discharge unit 165 along the first transportation path 162 and the second transportation path 164.

The second transportation path 164 is branched from the first transportation path 162 at a branching point 225A that is positioned on downstream side of the fixing unit 155 in the sheet transporting direction of the first transportation path 162. Additionally, the second transportation path 164 converges to the first transportation path 162 at a converging point 225B that is positioned more upstream than the fixing unit 155 along the first transportation path 162. That is, the first transportation path 162 and the second transportation path 164 form a transportation path that circulates through the branching point 225A and the converging point 225B. The second transportation path 164 reverses the sheet that is transported from the fixing unit 155, by performing switch-back transportation, and then again transports the sheet to a position that is located on upstream side of the registration roller 215. The second transportation path 164 is a transportation path that is to be used if an image is formed on a rear surface of a sheet.

A path switching unit 230 is positioned at the branching point 225A. The path switching unit 230 guides the sheet that is transported from the fixing unit 155, toward the sheet discharge roller 166. Thereafter, the sheet discharge roller 166 is reversely rotated, and transports the sheet to the second transportation path 164, starting from a rear end of the sheet. In a non-drive state, the path switching unit 230, for example, is controlled in such a manner that the sheet is guided toward the sheet discharge roller 166. On the other hand, in a drive state, the path switching unit 230 is controlled in such a manner that the sheet is guided from the sheet discharge roller 166 toward the second transportation path 164.

Next, a sheet reversal operation is described. The sheet that is transported from the fixing unit 155 is sandwiched at a nip portion of the sheet discharge roller 166. At this point, the control unit 100 not only causes the sheet discharge roller 166 to be reversed, but also controls the path switching unit 230 to be in the drive state and thus causes the sheet to be guided toward the second transportation path 164 at the branching point 225A. Thereafter, the sheet is transported to the second transportation path 164, and then is transported to the converging point 225B, in a state where front and rear sides of the sheet are reversed.

The sheet discharge roller 166 discharges a sheet to the sheet discharge tray 167. If the discharged sheet is detected by the sensor 168 that is positioned in the sheet discharge unit 165, the sensor 168 transmits to the control unit 100 a signal indicating that the discharged sheet is detected.

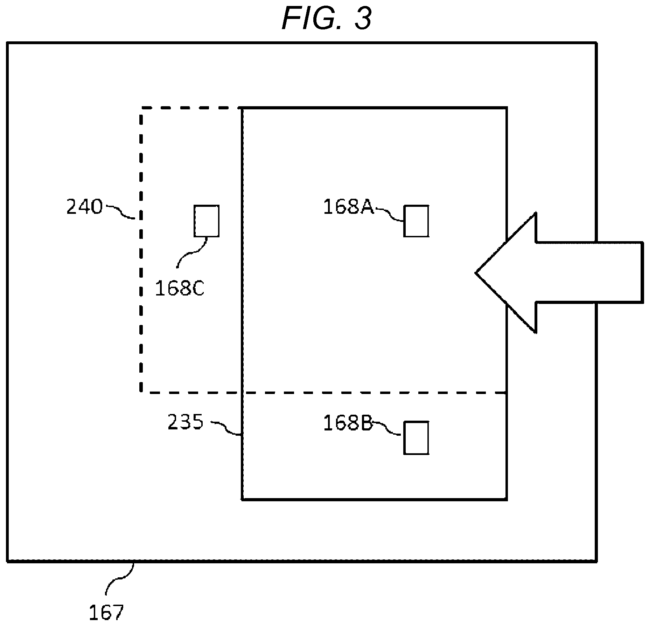

FIG. 3 is a plan view illustrating a position of the sensor 168 of the sheet discharge tray 167 according to the embodiment. In FIG. 3, an arrow indicates a direction of sheet discharge. Furthermore, an area 235 where the sheet that is discharged to be in a vertical orientation, in which a longitudinal direction of the sheet is orthogonal to the direction of the sheet discharge is loaded is indicated by a solid line. An area 240 where the sheet that is discharged to be in a horizontal orientation in which the longitudinal direction of the sheet is in parallel with the direction of the sheet discharge is loaded is indicated by a dotted line. Furthermore, an example of a position where the sensor 168, that includes sensors 168A-168C, is located is shown.
- A sensor 168A is provided in a position where each of a sheet in the vertical orientation that is loaded on the area 235 and a sheet in the horizontal orientation that is loaded on the area 240 is detectable.
- A sensor 168B is provided in a position where the sheet in the vertical orientation that is loaded on the area 235 is detectable.
- A sensor 168C is provided in a position where the sheet in the horizontal orientation that is loaded on the area 240 is detectable.

As described above, by combining the sensors 168A, 168B, and 168C, the control unit 100 can detect the orientation of the sheet that is loaded on the sheet discharge tray 167. For example, when the sensor 168A and the sensor 168B detect a sheet, the control unit 100 determines that the sheet that is loaded on the sheet discharge tray 167 is oriented vertically. On the other hand, when the sensor 168A and the sensor 168C detect a sheet, the control unit 100 determines that the sheet that is loaded on the sheet discharge tray 167 is oriented horizontally.

Moreover, the positions of the sensors 168A-168C are not limited to these, and a more specific sheet loading position or sheet size may be made to be able to be detected by freely changing the arrangement and the combination according to a situation. Furthermore, the sensor 168 may be provided in a place other than the sheet discharge tray 167. For example, in order to detect a loaded state of a sheet, a camera may be provided on a surface facing the sheet discharge tray 167, of the sheet discharge unit 165 that makes possible discharge within a footprint of the image forming apparatus 1 itself.

Next, a light blocking sheet 300 is described. In the following description, a job X includes an instruction to print a plurality of pages including a page X1 and a page X2 one sheet after another, and to continuously discharge a sheet set X including a sheet X1 on which an image of the page X1 is printed and a sheet X2 on which an image of the page X2 is printed. Moreover, in some cases, the job X includes an instruction to perform printing on only one sheet and discharge only the one sheet. In the image forming apparatus 1 according to the embodiment, if the sheet set X that is discharged at the job X remains loaded on the sheet discharge tray 167, the light blocking sheet 300 is discharged onto the sheet set X that is loaded on the sheet discharge tray 167. The control unit 100 can discharge the light blocking sheet 300 in such a manner that the light blocking sheet 300 is superimposed on the sheet set X that is loaded on the sheet discharge tray 167, and thus can suppress printed contents of the sheet set X from being viewed from the outside. A light transmission blocking image 305 is formed on a sheet that is placed on the sheet set X so that it can prevent the printed contents of the sheet set X from being viewed through the sheet. Such a sheet does not allow light to be transmitted therethrough and is referred to as the light blocking sheet 300.

However, the light blocking sheet 300 is not limited to the sheet on which the light blocking image 305 is formed. For example, a sheet or film that is colored, for example, in black or the like may be accommodated in advance in the sheet accommodation unit 200, and may be discharged as the light blocking sheet 300. Furthermore, if an image is not formed on a page on the uppermost surface of the sheet set X, a sheet of white paper may be discharged as the light blocking sheet 300. Additionally, the light blocking sheet 300 may be a sheet that prevents light from transmitting only through specific portion (for example, a portion on which a letter, a figure, or the like is formed) of an image that is formed on the page on the uppermost surface of the sheet set X.

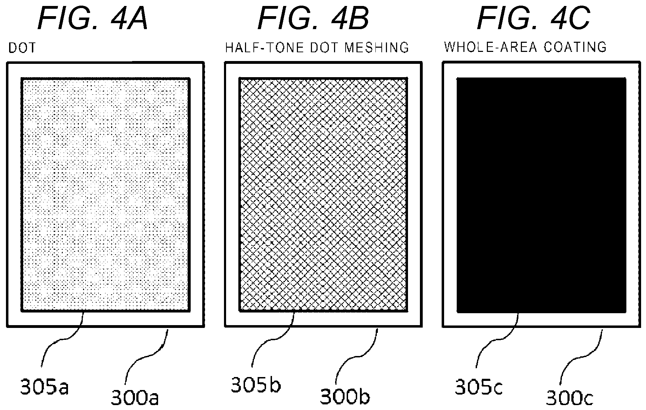

FIGs. 4A to 4C illustrate patterns of the light blocking image 305. FIGs. 4A to 4C illustrate light blocking sheets 300a, 300b, and 300c, respectively. A dot pattern 305a, a half-tone dot meshing pattern 305b, and a whole-area coating pattern 305c are formed on the light blocking sheets 300a, 300b, and 300c, respectively, as patterns of the light blocking image 305. Moreover, the patterns of the light blocking image 305 are not limited to the three patterns described above, and any pattern may be formed if the printed contents of the sheet set X can be suppressed from being viewed from the outside when the light blocking sheet 300 is discharged in such a manner that the light blocking sheet 300 is superimposed onto the sheet set X. The light blocking sheet 300a on which the dot pattern 305a is formed as the light blocking sheet 300 is taken as an example for description purposes.

Next, control of the discharge of the light blocking sheet 300a by the control unit 100 is described. When the sensor 168 detects the sheet set X, the timer 125 starts to count the time. If a predetermined time elapses in a state where the sensor 168 detects the sheet set X on the sheet discharge tray 167, the notification unit 175 notifies the job executor that the sheet set X is loaded on the sheet discharge tray 167. This notification, for example, is performed using a method of transmitting email to the email address corresponding to the job executor or the like. Thereafter, the control unit 100 discharges the light blocking sheet 300a onto the sheet set X. On the other hand, if the sensor 168 does not detect the sheet set X until the predetermined time elapses, the discharge of the light blocking sheet 300a is not performed.

At this point, the control unit 100 performs selection of a sheet that is used as the light blocking sheet 300a, based on the orientation of the sheet set X. That is, if the sensors 168A and 168B in FIG. 3 detect the sheet set X, the light blocking sheet 300a is discharged to be in the vertical orientation. On the other hand, if the sensors 168A and 168C detect the sheet set X, the light blocking sheet 300a is discharged to be in the horizontal orientation. Moreover, if both of the sensors 168B and 168C detect the sheet set X, a sheet that has a larger size than the sheet set X may be discharged as the light blocking sheet 300a.

Moreover, determination of the orientation of the sheet set X that is loaded on the sheet discharge tray 167 is not limited to the method described above. When the sheet set X is printed at a printing job, the orientation of the sheet set X may be determined based on information on the orientation of the sheet, which is included in the job X.

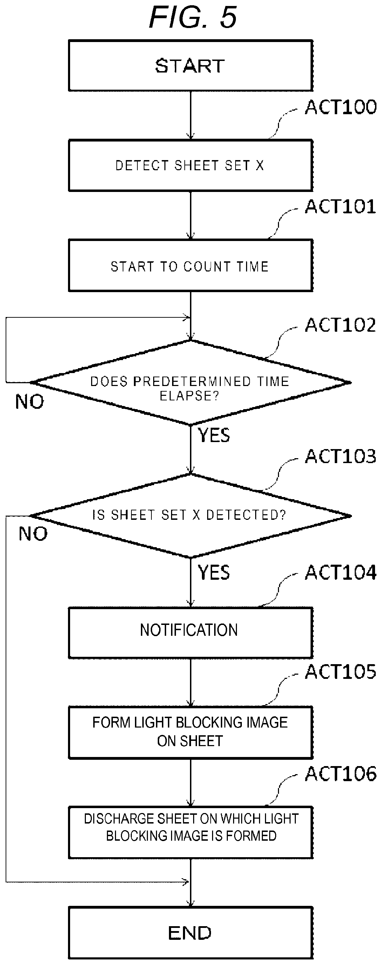

FIG. 5 is a flowchart depicting control process to discharge the light blocking sheet 300a.

The control unit 100 starts processing when the sensor 168 detects the sheet set X (ACT 100). At this time, the timer 125 of the control unit 100 starts to count the time (ACT 101). Thereafter, after a predetermined time elapses (YES in ACT 102), if the sensor 168 does not detect the sheet set X (NO in ACT 103), the control unit 100 ends a processing sequence. On the other hand, if the sensor 168 detects the sheet set X (YES in ACT 103), the control unit 100 causes the notification unit 175 to notify the job executor that the sheet set X is still loaded on the sheet discharge tray 167. This notification is performed using the method of transmitting email to the email address corresponding to the job executor or the like (ACT 104) .

Thereafter, the control unit 100 causes the image forming unit to form the dot pattern 305a, as the light blocking sheet 300a, on a sheet (ACT 105), and discharges the sheet on which the dot pattern 305a is formed as the light blocking sheet 300a (ACT 106). Moreover, an orientation and a size of the sheet that is fed, as the light blocking sheet 300a, to the image forming unit are determined based on a loaded state of the sheet set X that is detected by the sensor 168. Thereafter, the control unit 100 ends a processing sequence.

As described above, the image forming apparatus according to the embodiment discharges the light blocking sheet onto the sheet that is discharged after a predetermined time elapses, and thus information can be prevented from leaking out from the sheet that remains loaded on the sheet discharge tray.

Moreover, in the example described above, the control unit 100 starts to discharge the light blocking sheet 300a when a predetermined time elapses after the sheet set X is discharged. However, the control unit 100 may discharge the light blocking sheet 300a in succession to the sheet set X after the sheet set X is discharged.

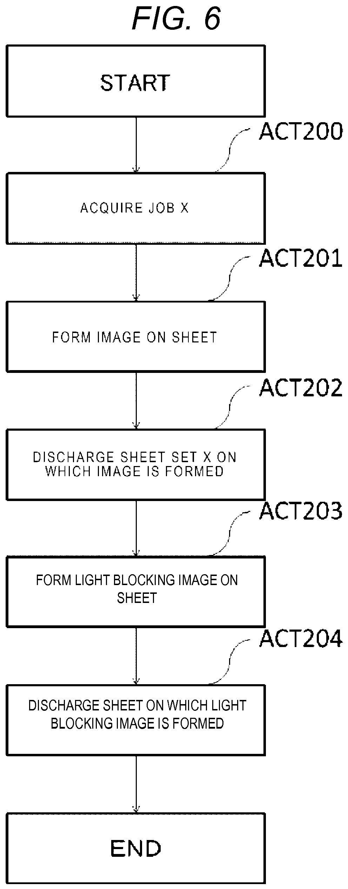

FIG. 6 is a flowchart depicting control process to discharge the light blocking sheet 300a in succession to the sheet set X after the discharge of the sheet set X.

When the control unit 100 acquires the job X (ACT 200), the control unit 100 causes the image forming unit to perform formation of an image on a sheet (ACT 201). When the image forming process to the sheet by the image forming unit is completed, the control unit 100 causes the sheet discharge unit 165 to discharge the sheet set X onto the sheet discharge tray 167 (ACT 202). Next, the control unit 100 feeds a sheet to the image forming unit and performs the formation of the dot pattern 305a as the light blocking image 305 (ACT 203). Moreover, as the sheet that is fed as the light blocking sheet 300a to the image forming unit, a sheet that has the same orientation and size as the sheet set X is used. When the image forming process of the dot pattern 305a is completed, the control unit 100 causes the sheet discharge unit 165 to discharge the sheet on which the dot pattern 305a is formed as the light blocking sheet 300a to the sheet discharge tray 167 (ACT 204) . As described above, the control unit 100 ends a control sequence.

In the modification example described above, because the light blocking sheet is discharged in succession after the sheet is discharged at the printing job, confidentiality that prevents information from leaking out from the sheet until the discharged sheet is taken by the user can be increased.

### Second Embodiment

In the image forming apparatus 1 according to the second embodiment, if a next printing job is acquired before the sheet set of the current printing job is taken by the user, the light blocking sheet 300a is discharged to the sheet discharge tray 167.

In the following description, a job A includes an instruction to print a plurality of pages including a page A1 and a page A2 one sheet after another, and then immediately to discharge a sheet set A including a sheet A1 on which an image of the page A1 is printed and a sheet A2 on which an image of the page A2 is printed. In the same manner, a job B includes an instruction to print a plurality of pages including a page B1 and a page B2 one sheet after another, and to continue to discharge a sheet set B including a sheet B1 on which an image of the page B1 is printed and a sheet B2 on which an image of the page B2 is printed. Furthermore, a person who executes the job A is referred to as a job executor A, and a person who executes the job B is referred to as a job executor B. Moreover, in some cases, each of the job A and the job B includes an instruction to perform printing on only one sheet and discharge only the one sheet.

Because a configuration of the image forming apparatus 1 is the same as in the first embodiment, a description thereof is omitted.

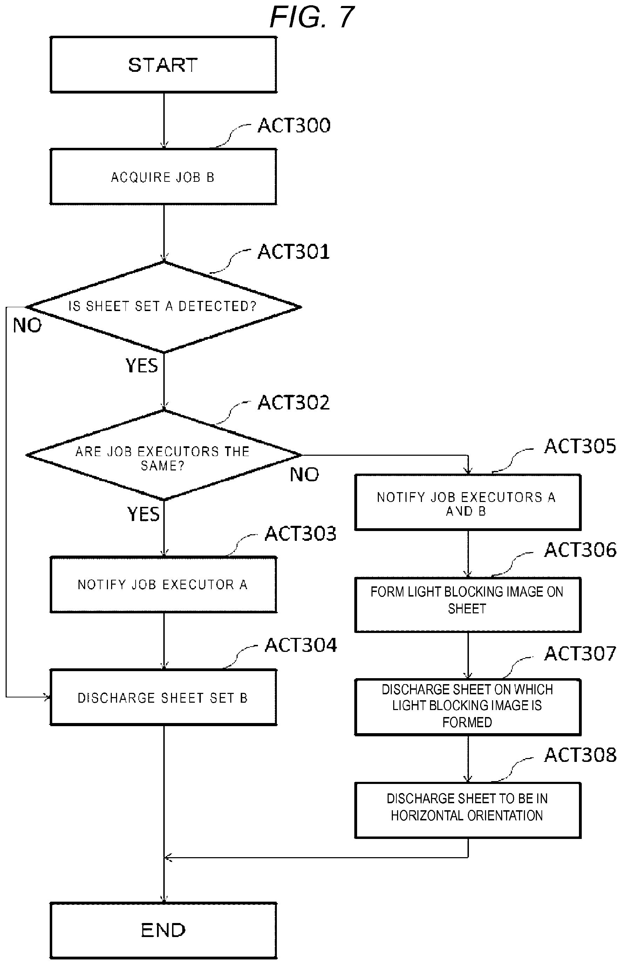

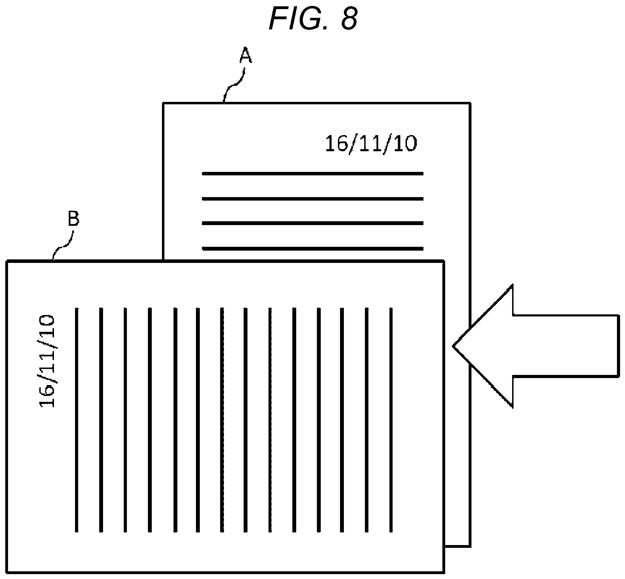

FIG. 7 is a flowchart depicting control process to be performed when the job B is received in a state where the sheet set A is loaded on the sheet discharge tray 167. When acquiring the job B (ACT 300), the control unit 100 determines whether or not the sensor 168 detects the sheet set A loaded on the sheet discharge tray 167 (ACT 301). If the sensor 168 does not detect the sheet set A (NO in ACT 301), the control unit 100 executes the job B and discharges the sheet set B (ACT 304) . Thereafter, the control unit 100 ends a processing sequence. If the sensor 168 detects the sheet set A (YES in ACT 301), the control unit 100 determines whether or not the job executor A and the job executor B are the same (ACT 302). When the control unit 100 determines that the job executor A and the job executor B are the same (YES in ACT 302), the control unit 100 causes the notification unit 175 to notify the job executor A that the sheet set A remains loaded on the sheet discharge tray 167 (ACT 303). This notification is performed with the transmission of email to the email address corresponding to the job executor A or the like. Thereafter, the control unit 100 discharges the sheet set B without discharging the light blocking sheet 300a (ACT 304). Moreover, the sheet set B is discharged to be in the vertical orientation, but as illustrated in FIG. 8, may be discharged to be in the horizontal orientation.

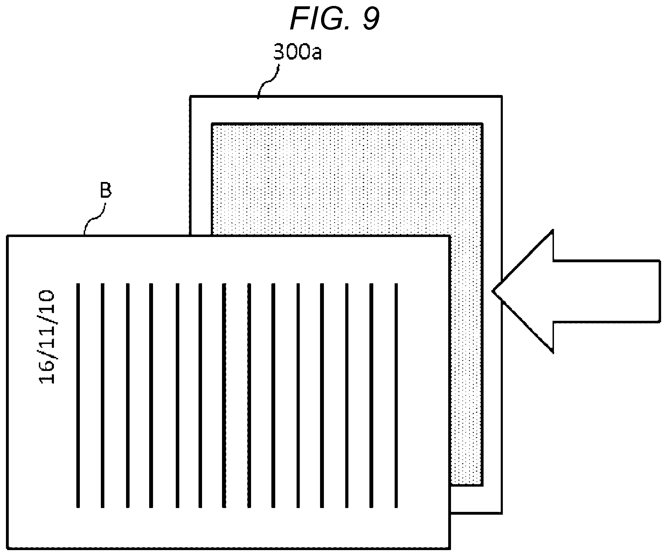

On the other hand, in ACT 302, if the control unit 100 determines that the job executor A and the job executor B are not the same (NO in ACT 302), the control unit 100 causes the notification unit 175 to notify both of the job executor A and the job executor B that the sheet set A is loaded on the sheet discharge tray 167 (ACT 305) . This notification is performed with the transmission of email to the email addresses corresponding to the job executor A and a PC of the job executor B, or the like. Moreover, instead of this email notification, the notification unit 175 may display the information that indicates the sheet set A is loaded on the sheet discharge tray 167, as a notification, on the control panel 145. Thereafter, the control unit 100 causes the image forming unit to form the dot pattern 305a, as the light blocking image, on a sheet (ACT 306), and discharges the sheet as the light blocking sheet 300a (ACT 307). As illustrated in FIG. 9, the control unit 100 causes the sheet set B to be discharged to be in the horizontal orientation (ACT 308). When the sheet set B is discharged with these processing operations, the control unit 100 ends a processing sequence.

As described above, although a next job is received before the job executor takes the sheet set that is loaded on the discharge tray, the image forming apparatus according to the embodiment can prevent information from leaking out when a sheet is taken by mistake by a person other than the person concerned and thus a printing side of the sheet is viewed.

Moreover, according to the embodiment, after the notification unit 175 notifies the job executor A and the job executor B that the sheet set A is still loaded on the sheet discharge tray 167, the light blocking sheet 300a is discharged, but after the light blocking sheet 300a is discharged, the notification unit 175 may notify the job executor A and the job executor B that the sheet set A is still loaded on the sheet discharge tray 167.

Moreover, in the example described above, according to the first embodiment, the light blocking sheet 300a is discharged under the condition that a predetermined time elapses in a state where the sensor 168 detects the sheet set X on the sheet discharge tray 167. On the other hand, according to the second embodiment, the light blocking sheet 300a is discharged under the condition that a next printing job is acquired in a state where the sensor 168 detects the sheet set A on the sheet discharge tray 167. However, the control unit 100 may perform the determination process based on a combination of these conditions as a condition to discharge the light blocking sheet 300a.

That is, when the sensor 168 detects the sheet set A on the sheet discharge tray 167, the timer 125 starts to count the time. If a predetermined time elapses in a state where the sensor 168 detects the sheet set A, or if a next printing job is acquired before the predetermined time elapses in the state where the sensor 168 detects the sheet set A, the light blocking sheet 300a may be discharged.

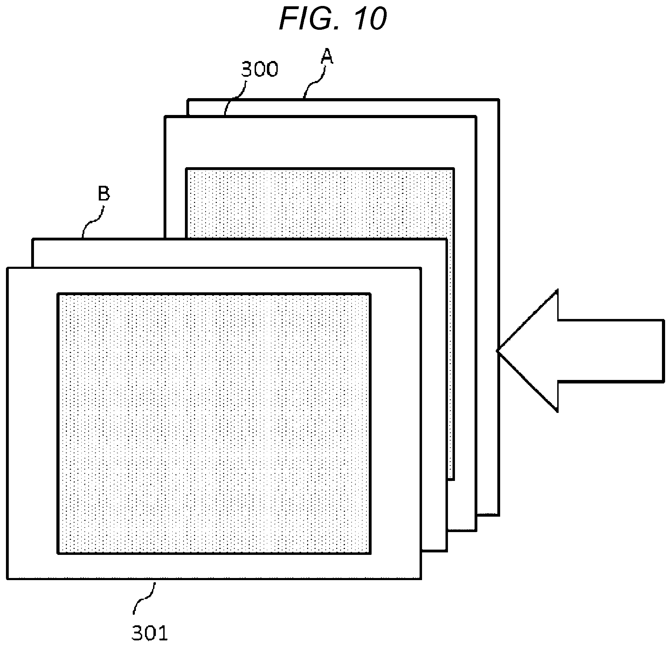

Moreover, there is a possibility that the sheet set B is discharged at the job B, and then the job executor B forgets to pick up the sheet set B. In such a case, the sheet set B is handled in the same manner as the sheet set A described above, and the same processing is performed. More precisely, as illustrated in FIG. 10, if the sheet set B remains undelivered for a period of time after the discharge, or if the subsequent job C is received in a state where the sheet set B is loaded on the sheet discharge tray 167, the processing sequence described above is performed and a new light blocking sheet 301 is discharged. The light blocking sheet 301 is discharged to be in the horizontal orientation. Thereafter, the sheet set C that is discharged at the job C is discharged to be in the vertical orientation.

Furthermore, as another pattern as the light blocking sheet 300, a sheet that has a larger size than the sheet set X may be made to be discharged. For example, when a sheet is in short supply, the image forming apparatus 1 is assumed to be set in such a manner that the control unit 100 stops the processing. In such a case, if the sheet set X is of the A4 size and a sheet that is of the A4 size is in short supply within the sheet accommodation unit 200, the control unit 100 uses a sheet that is of the A3 size or of the B4 size, as the light blocking sheet 300.

Accordingly, although a sheet that is of the same size is in short supply, the printed contents of the sheet set X can be prevented from leaking out. Furthermore, the light blocking sheet 300 that has a larger size than the sheet set X is discharged and thus visibility of the sheet X from a person other than the job executor can be more decreased. Furthermore, in order to reuse the sheet that is used as the light blocking sheet 300, the light blocking image 305 may be printed with the decolorable toner.

Each of the patterns as the light blocking sheets 300, which are described above, does not need to be separately used, and a plurality of patterns may be used in free combination.

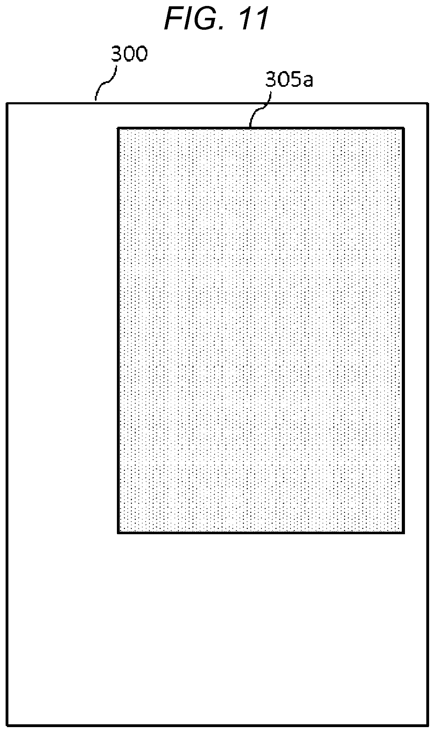

For example, as illustrated in FIG. 11, the printing of the dot pattern 305a may be performed on a sheet that has a larger size than the sheet A, using the decolorable toner. In this case, a position on which the dot pattern 305a is printed may be a portion that overlaps the sheet X.

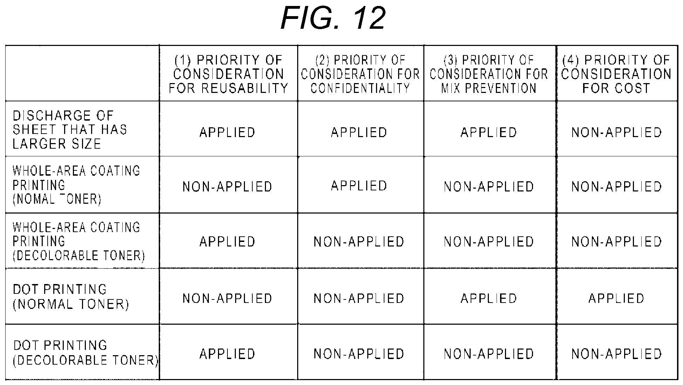

Moreover, a combination of patterns as the light blocking sheets 300 may be arbitrarily set by an administrator or an individual user. Details of settings, for example, include whether or not to print a light blocking image using whole-area coating, whether or not to set the light blocking sheet 300 to be a sheet that has a larger size than the size of the sheet set A, whether or not to print the light blocking sheet 300 using the decolorable toner, and so on. These settings may be independently configured, but for example, when "priority of consideration for confidentiality" is selected from a setting screen as illustrated in FIG. 12, "whole-area coating printing (a normal toner) " and "use of a sheet that has a larger size than the sheet X" may be automatically set. In the same manner, when "priority of consideration for cost" is selected, "dot printing (a normal toner)" may be automatically set.

Moreover, if a finisher, as an optional apparatus, that has a plurality of sheet discharge trays 167, is mounted into the image forming apparatus 1, instead of changing the orientation of the sheet set B, the control unit 100 may perform discharging to the sheet discharge tray 167 that is not used.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An image forming apparatus comprising:
an image forming unit configured to form an image on a sheet;
a sheet discharge tray;
a sheet discharge unit positioned between the image forming unit and the sheet discharge tray to discharge a first sheet after an image has been formed on the first sheet by the image forming unit, onto the sheet discharge tray; and
a control unit configured to cause a second sheet, which is a light blocking sheet, to be discharged onto the first sheet after the first sheet has been discharged onto the sheet discharge tray.

2. The apparatus according to claim 1,
wherein the light blocking sheet is a sheet on which a light blocking image is formed by the image forming unit.

3. The apparatus according to claim 1 or 2,
wherein the light blocking sheet is a sheet made of light blocking material.

4. The apparatus according to any of claims 1 to 3,
wherein the light blocking sheet has a larger size than the first sheet.

5. The apparatus according to any of claims 1 to 4, further comprising:
a sheet sensor installed on the sheet discharge tray to detect whether or not a sheet is loaded on the sheet discharge tray; and
a timer configured to measure a time period the sheet remains detected by the sensor,
wherein, if the measured time period exceeds a predetermined time period, the control unit causes the light blocking sheet to be discharged onto the detected sheet.

6. The apparatus according to any of claims 1 to 5, further comprising:
a sheet sensor installed on the sheet discharge tray to detect whether or not a sheet is loaded on the sheet discharge tray,
wherein, if the sensor detects the sheet on the sheet discharge tray upon execution of a new printing job, the control unit causes the light blocking sheet to be discharged onto the detected sheet.

7. The apparatus according to any of claims 1 to 6, further comprising:
a sheet sensor installed on the sheet discharge tray to detect whether or not a sheet is loaded on the sheet discharge tray,
wherein, if the sensor detects the sheet on the sheet discharge tray upon execution of a new printing job, the control unit (i) causes the light blocking sheet to be discharged onto the detected sheet in response to determining that an executor of the new printing job is different from an executor of a printing job that produced the detected sheet, and (ii) cause a sheet from the new printing job to be discharged on top of the detected sheet without discharging the light blocking sheet.

8. The apparatus according to any of claims 1 to 7, wherein the control unit causes sheets from different jobs to be discharged alternately to be in a vertical orientation and a horizontal orientation.

9. An image forming method comprising:
forming an image on a first sheet;
discharging the first sheet after the image has been formed on the first sheet onto a sheet discharge tray; and
discharging a second sheet, which is a light blocking sheet, onto the first sheet after the first sheet has been discharged onto the sheet discharge tray.

10. The method according to claim 9,
wherein the light blocking sheet is a sheet on which a light blocking image is formed by the image forming unit.

11. The method according to claim 9 or 10,
wherein the light blocking sheet is a sheet made of light blocking material.

12. The method according to any of claims 9 to 11, further comprising:
detecting whether or not a sheet is loaded on the sheet discharge tray;
measuring a time period the sheet remains detected by the sensor; and
upon detecting that the measured time period exceeds a predetermined time period, discharging the light blocking sheet onto the detected sheet.

13. The method according to any of claims 9 to 12, further comprising:
detecting whether or not a sheet is loaded on the sheet discharge tray; and
if the sheet is detected to be on the sheet discharge tray upon execution of a new printing job, discharging the light blocking sheet onto the detected sheet.

14. The method according to any of claims 9 to 13, further comprising:
detecting whether or not a sheet is loaded on the sheet discharge tray; and
if the sheet is detected to be on the sheet discharge tray upon execution of a new printing job, (i) discharging the light blocking sheet onto the detected sheet in response to determining that an executor of the new printing job is different from an executor of a printing job that produced the detected sheet, and (ii) discharging a sheet from the new printing job on top of the detected sheet without discharging the light blocking sheet.

15. The method according to any of claims 9 to 14, wherein sheets from different jobs are discharged alternately to be in a vertical orientation and a horizontal orientation.
